# EUROPÄISCHE PATENTANMELDUNG

(11) **EP 0 886 057 A1**
(43) Veröffentlichungstag der Anmeldung: **23.12.1998**
(21) Anmeldenummer: 98108697.8
(22) Anmeldetag: 13.05.1998
(51) Int. Cl.: F02D 41/24, G01D 3/02, G01D 18/00

(54) **Verfahren zur Bestimmung einer unbekannten Betriebsgrösse eines Kraftfahrzeugs**

(30) Priorität: 18.06.1997 DE 19725673
(71) Anmelder: Bayerische Motoren Werke Aktiengesellschaft, 80788 München (DE)
(72) Erfinder: Pabinger, Gerhard, 4451 Garsten (AT)

(57) **Zusammenfassung**

Bei einem Verfahren zur Bestimmung einer unbekannten Betriebsgröße eines Kraftfahrzeugs in Abhängigkeit von einer ersten bekannten Betriebsgröße und von einer zweiten bekannten Betriebsgröße durch ein tabellenförmig, entsprechend dem kartesischen Koordinatensystem in einem Speicher eines elektronischen Steuergeräts abgespeichertes Kennfeld zur Ausführung von vorgebbaren Kraftfahrzeugfunktionen, sind die Stützstellen des Kennfeldes nur bezüglich der der ersten bekannten Betriebsgröße zugeordneten Achse des Koordinatensystems fest und bezüglich der beiden anderen Achsen entsprechend realer Meßwerte vorgegeben.

Vorzugsweise wird die dreidimensionale Oberfläche des Kennfeldes im kartesischen Koordinatensystem durch ebene Dreiecksflächen zwischen den Stützstellen des Kennfeldes gebildet. Für ein Wertepaar der ersten bekannten Betriebsgröße und der zweiten bekannten Betriebsgröße, für das keine Stützstelle definiert ist, wird eine Interpolation derart vorgenommen, daß die unbekannte Betriebsgröße in der Dreiecksfläche liegt, auf die ausgehend von diesem Wertepaar ein Vektor zeigt, der zu der durch die Achsen der beiden bekannten Betriebsgrößen aufgespannten Ebene senkrecht steht.

## Beschreibung

Die Erfindung betrifft ein Verfahren zur Bestimmung einer unbekannten Betriebsgröße eines Kraftfahrzeugs nach dem Oberbegriff des Patentanspruchs 1.

Ein derartiges Verfahren ist insbesondere im Zusammenhang mit elektronischen Steuergeräten zur Ausführung von Brennkraftmaschinenfunktionen aus dem Fachbuch 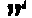 Autoelektrik, Autoelektronik am Ottomotor", Robert Bosch GmbH, 1994, bekannt. Beispielsweise wird in diesem Fachbuch auf Seite 163 (Bild 2) ein Kennfeld dargestellt, durch das der Zündwinkel in Abhängigkeit von der Drehzahl und der Last als bekannte Betriebsgrößen bestimmt wird. Auf Seite 165 (Bild 6) ist ein Kennfeld dargestellt, durch das der Schließwinkel für die Ansteuerung einer Zündspule in Abhängigkeit von der Drehzahl und der Batteriespannung als bekannte Betriebsgrößen bestimmt wird. Grundsätzlich besteht die Oberfläche eines derartigen Kennfeldes im kartesischen Koordinatensystem aus einem Netz von Stützstellen, wobei jeweils vier Stützstellen ein rechteckiges Flächenelement bilden. Insbesondere im Bild 2 (oben) auf Seite 163 ist ersichtlich, daß die rechteckigen Flächenelemente der Oberfläche eines Kennfeldes auch räumlich gekrümmt sein können. Die Linien der rechteckigen Flächenelemente verlaufen parallel zur X- und Y-Achse. Um eine derartige regelmäßige Struktur der Stützstellen bzw. der aus Rechtecken bestehenden Oberfläche des Kennfeldes zu schaffen, können die Stützstellen bzw. die Kennfelddaten nur zum Teil auf realen Meßwerten, z. B. eines Brennkraftmaschinenprüfstands, basieren. Um eine gleichmäßige Stützstellenstruktur eines Kennfeldes aus den üblicherweise sehr unstrukturierten Meßwerten zu erhalten, werden die Stützstellen mittels Interpolation ermittelt. Dies bedeutet einen hohen Applikationsaufwand und führt bei Unstetigkeiten zu Fehlern.

Es ist daher Aufgabe der Erfindung, ein Verfahren zur Bestimmung von Betriebsgrößen über Kennfelder eingangs genannter Art derart zu verbessern, daß sich der Applikationsaufwand reduziert und Ungenauigkeiten minimiert werden.

Diese Aufgabe wird durch die kennzeichnenden Merkmale des Patentanspruchs 1 gelöst. Die Gegenstände der Unteransprüche sind vorteilhafte Weiterbildungen der Erfindung.

Der Erfindung liegt der Gedanke zugrunde, nach Möglichkeit die realen Meßwerte direkt als Kennfeldwerte bzw. Stützstellen eines Kennfeldes einzusetzen.
Nachdem die Kennfeldoberfläche eine Fläche im Raum darstellt, wird diese Fläche vorzugsweise aus den kleinsten Elementen, die eine Ebene im Raum definieren, nämlich aus ebenen Dreiecksflächen zusammengesetzt. Dabei ist die Stützstellenstruktur nicht völlig beliebig, da die Werte der Stützstellen für eine bekannte Betriebsgröße fest bzw. konstant über den Betriebsbereich der anderen Betriebsgröße vorgegeben werden. Die Verbindungsgeraden zwischen den Werten der zweiten bekannten Betriebsgröße für jeweils konstante Werte der ersten bekannten Betriebsgröße bilden jeweils eine Seite von Dreiecksflächen. Im übrigen werden davon ausgehend die Dreiecke derart verlegt, daß die Summe der Längen der Dreiecksseiten ein Minimum darstellt. Liegen im Realfall Wertepaare der ersten bekannten Betriebsgröße und der zweiten bekannten Betriebsgröße vor, für die keine Stützstelle definiert ist, wird eine Interpolation vorgenommen. Die Interpolation wird derart vorgenommen, daß die unbekannte Betriebsgröße in der Dreiecksfläche liegt, auf die ausgehend von diesem Wertepaar ein Vektor zeigt, der zu der durch die Achsen der beiden bekannten Betriebsgrößen aufgespannten Ebene senkrecht steht.

Durch dieses Verfahren zur Bestimmung einer unbekannten Betriebsgröße über ein Kennfeld, das durch die erfindungsgemäße Stützstellenstruktur definiert ist, können ausschließlich reale Meßwerte als Kennfeldwerte bzw. Stützstellen eingesetzt werden, wodurch die Erstellung eines derartigen Kennfeldes erleichtert und die Bestimmung der unbekannten Betriebsgröße genauer wird.

In der Zeichnung ist ein Ausführungsbeispiel der Erfindung dargestellt. Es zeigt
- Fig. 1: den Ausschnitt eines ebenen Dreiecksflächenelements aus der dreidimensionalen Oberfläche des Kennfeldes nach der Erfindung,
- Fig. 2: einen Ausschnitt als gekrümmtes Rechtecksflächenelement aus einer dreidimensionalen Oberfläche des Kennfeldes nach dem Stand der Technik,
- Fig. 3: eine tabellenförmig, entsprechend dem kartesischen Koordinatensytem dargestellte Stützstellenstruktur eines Kennfeldes nach dem Stand der Technik,
- Fig. 4: eine tabellenförmig, entsprechend dem kartesischen Koordinatensystem dargestellte Stützstellenstruktur eines Kennfeldes nach der Erfindung,
- Fig. 5: die Bildung der dreidimensionalen Oberfläche des Kennfeldes durch ebene Dreiecksflächen nach der Erfindung und
- Fig. 6: die Bestimmung einer unbekannten Betriebsgröße durch Interpolation für ein Wertepaar der ersten und der zweiten bekannten Betriebsgröße, für das keine Stützstelle definiert ist.

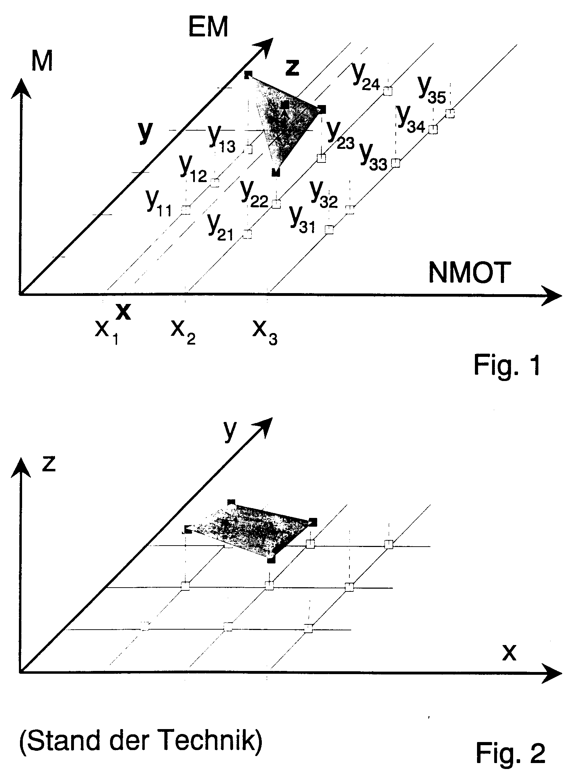

Nach dem erfindungsgemäßen Ausführungsbeispiel wird ein sogenanntes Drehmoment-Kennfeld für Dieselbrennkraftmaschinen dargestellt, wobei auf der X-Achse als erste bekannte Betriebsgröße die Drehzahl NMOT, auf der Y-Achse als zweite bekannte Betriebsgröße die Einspritzmenge EM und auf der Z-Achse als unbekannte, zu bestimmende Betriebsgröße das Brennkraftmaschinen-Drehmoment M aufgetragen sind. In Fig. 1 ist eine ebene Dreiecksfläche als Element der dreidimensionalen Oberfläche eines Kennfeldes dargestellt, dessen Eckpunkte durch die Wertepaare x₁/y₁₃, x₂/y₂₂ und x₂/y₂₃ der ersten bekannten Betriebsgröße NMOT und der zweiten bekannten Betriebsgröße EM sowie durch die jeweils den Wertepaaren zugeordneten Werte der zu bestimmenden Betriebsgröße M definiert sind. Diese Eckpunkte der Dreiecksfläche sind gleichzeitig Stützstellen des Kennfeldes. Liegt beispielsweise für die erste bekannte Betriebsgröße NMOT der Werte x und für die zweite bekannte Betriebsgröße EM der Wert y vor, existiert für das Wertepaar x/y keine eigene Stützstelle im Kennfeld. In diesem Fall wird für das Wertepaar x/y eine Interpolation durchgeführt. Die Interpolation wird derart vorgenommen, daß ausgehend von dem Wertepaar x/y in der Ebene, die durch die X- und die Y-Achse aufgespannt ist, ein senkrecht zur X-/Y-Ebene stehender Vektor, der in Richtung der Z-Achse zeigt, gelegt wird. Dieser Vektor durchstößt beim Wert z für die zu bestimmende Betriebsgröße M die Dreiecksfläche. Dieser Wert z ist die zu bestimmende Betriebsgröße M für den Wert x der Drehzahl NMOT und den Wert y der Einspritzmenge M.

Fig. 2 zeigt im Unterschied zu Fig. 1 eine gekrümmte Rechtecksfläche als Element der dreidimensionalen Oberfläche eines Kennfeldes nach dem Stand der Technik.

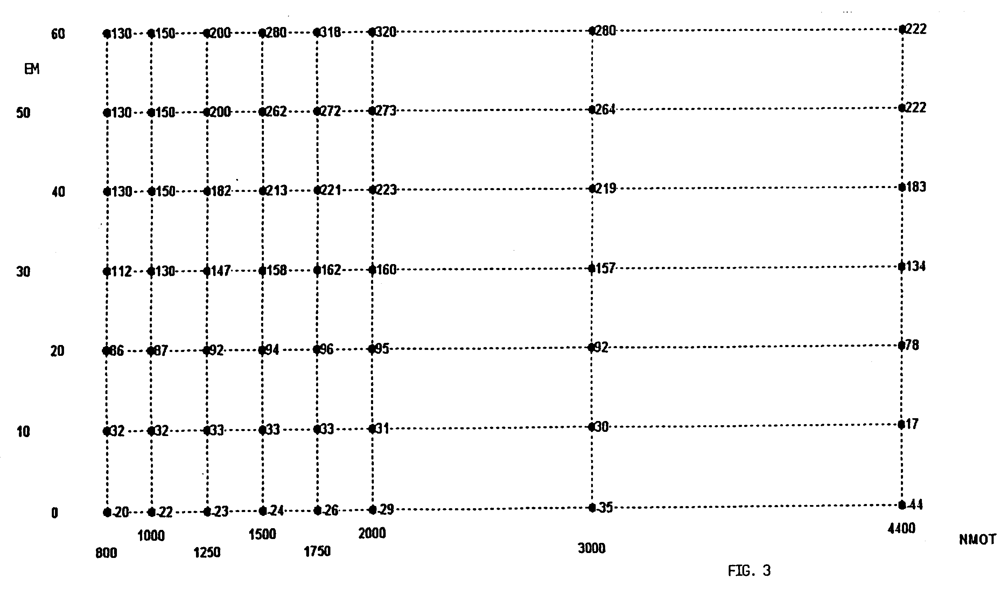

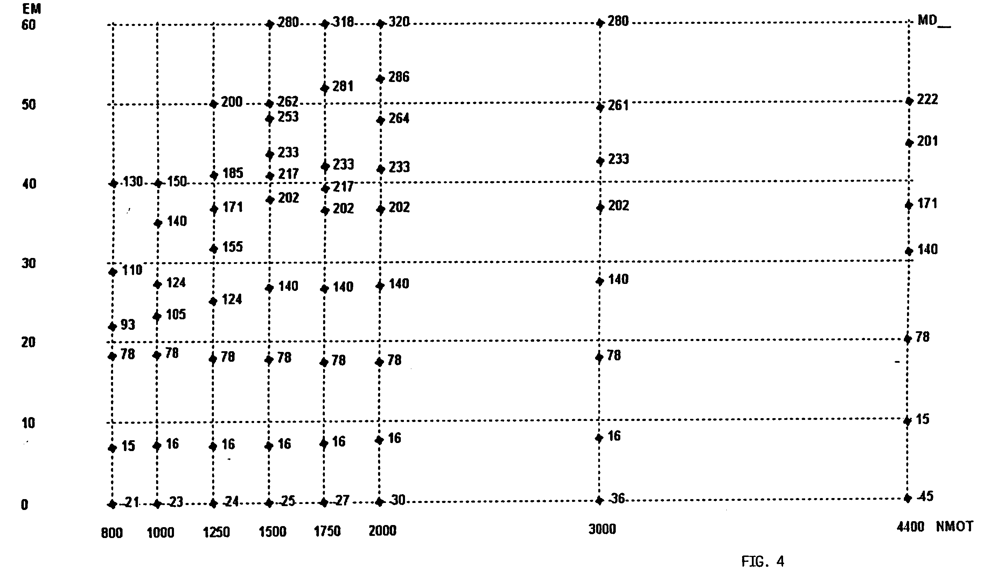

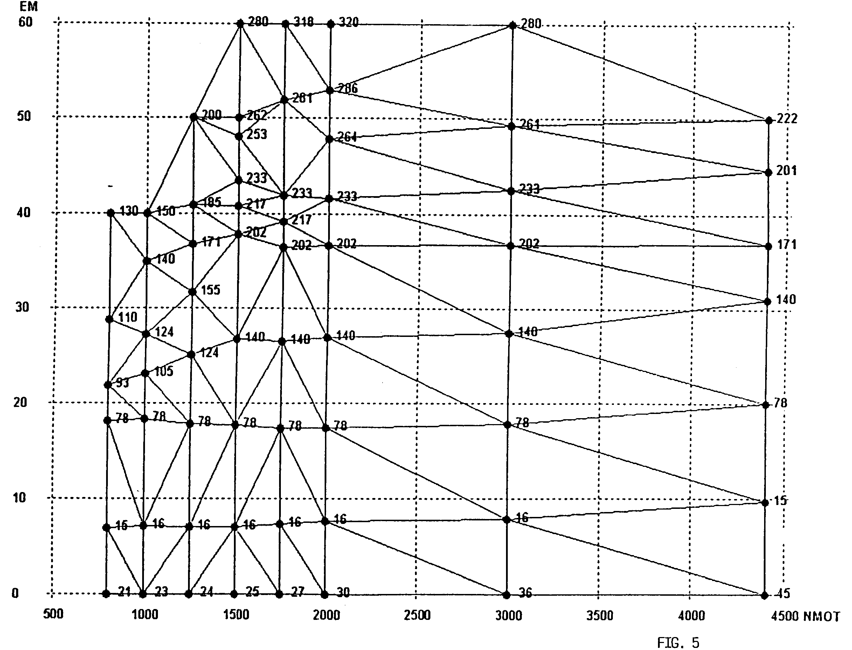

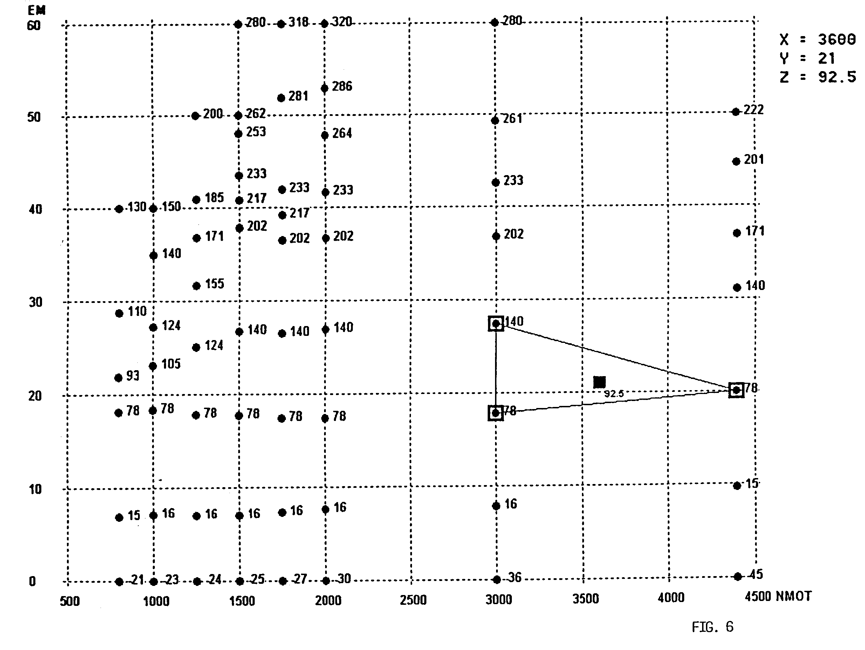

Die Figuren 3 bis 6 zeigen dreidimensionale Oberflächen von Kennfeldern vereinfacht in der Ebene bzw. tabellenförmig entsprechend dem kartesischen Koordinatensystem dargestellt. Auch in den Fig. 3 bis 6 sind auf der X-Achse als erste bekannte Betriebsgröße die Drehzahl NMOT und auf der Y-Achse als zweite bekannte Betriebsgröße die Einspritzmenge EM aufgetragen. Die zu bestimmende Betriebsgröße ist jeweils als Stützstelle mit zugehörigem Wert dargestellt. Fig. 3 zeigt die rasterförmige Stützstellenstruktur eines Kennfeldes nach dem Stand der Technik. Fig. 4 zeigt für jeweils fest bzw. konstant vorgegebene Werte der Drehzahl NMOT die durch Messung ermittelten Stützstellen. Zum Aufbau der Stützstellenstruktur des Kennfeldes werden die Meßwerte nicht gemäß Fig. 3 zum Erhalt einer rasterförmigen Stützstellenstruktur nach dem Stand der Technik geordnet und interpoliert, sondern die realen Meßwerte werden als Stützstellen des erfindungsgemäßen Kennfeldes beibehalten. In Fig. 5 wird in der x/y-Ebene dargestellt, wie sich die dreidimensionale Oberfläche des Kennfeldes erfindungsgemäß aus ebenen Dreiecksflächen zusammensetzt. Die Dreiecksflächen werden derart gewählt, daß die Summe der Längen der Dreiecksseiten ein Minimum darstellt. In Fig. 6 ist dargestellt, wie nach dem erfindungsgemäßen Verfahren eine Interpolation vorgenommen wird, wenn für ein Wertepaar der Drehzahl NMOT und der Einspritzmenge EM keine Stützstelle M vorliegt. Im Beispiel nach Fig. 6 ist der Wert x für die Drehzahl NMOT = 3600 U/min und der Wert y für die Einspritzmenge EM = 21 mg. Der Wert z für das unbekannte zu bestimmende Drehmoment M wird durch den Vektor, wie bereits zu Fig. 1 beschrieben ist, bestimmt und liegt in der durch drei Stützstellen aufgespannten Dreiecksfläche. Im dargestellten Beispiel ist der Wert z für das Drehmoment M beispielsweise 92,5 Nm.

Der Vorteil des erfindungsgemäßen Ausführungsbeispiels ist, daß die Stützstellen realen Meßwerten entsprechen können. Somit ist die Erstellung eines Kennfeldes nach dem erfindungsgemäßen Verfahren gegenüber der Erstellung von Kennfeldern nach den üblichen Verfahren stark vereinfacht. Ist eine Interpolation nach dem erfindungsgemäßen Verfahren notwendig, werden der Realität besser entsprechende Werte ermittelt als bei den üblichen Verfahren, die bereits Fehler in der Bestimmung der Stützstellen der Kennfelder aufweisen.

## Patentansprüche

1. Verfahren zur Bestimmung einer unbekannten Betriebsgröße (M; z) eines Kraftfahrzeugs in Abhängigkeit von einer ersten bekannten Betriebsgröße (NMOT; x) und von einer zweiten bekannten Betriebsgröße (EM; y) durch ein tabellenförmig, entsprechend dem kartesischen Koordinatensystem in einem Speicher eines elektronischen Steuergeräts abgespeichertes Kennfeld zur Ausführung von vorgebbaren Kraftfahrzeugfunktionen, dadurch gekennzeichnet, daß die Stützstellen des Kennfeldes nur bezüglich der der ersten bekannten Betriebsgröße (NMOT; x) zugeordneten Achse des Koordinatensystems fest und bezüglich der beiden anderen Achsen (M, z; EM, y) entsprechend realer Meßwerte vorgegeben sind.

2. Verfahren nach Patentanspruch 1, dadurch gekennzeichnet, daß die dreidimensionale Oberfläche des Kennfeldes im kartesischen Koordinatensystem durch ebene Dreiecksflächen zwischen den Stützstellen des Kennfeldes gebildet wird und daß für ein Wertepaar der ersten bekannten Betriebsgröße (NMOT; x) und der zweiten bekannten Betriebsgröße (EM; y), für das keine Stützstelle definiert ist, eine Interpolation derart vorgenommen wird, daß die unbekannte Betriebsgröße (M; z) in der Dreiecksfläche liegt, auf die ausgehend von diesem Wertepaar ein Vektor zeigt, der zu der durch die Achsen der beiden bekannten Betriebsgrößen aufgespannten Ebene senkrecht steht.

3. Verfahren nach Patentanspruch 2, dadurch gekennzeichnet, daß die Dreiecksflächen durch die Stützstellen zur Bildung der dreidimensionalen Oberfläche des Kennfeldes so gelegt werden, daß die Seitenlinien der Dreiecksflächen eine minimale Länge aufweisen.
